# EUROPÄISCHE PATENTSCHRIFT

(11) **EP 1 621 847 B1**
(45) Veröffentlichungstag und Bekanntmachung des Hinweises auf die Patenterteilung: **17.07.2013**
(21) Anmeldenummer: 04017468.2
(22) Anmeldetag: 23.07.2004
(51) Int. Cl.: G01D 11/30, G01D 5/347

(54) **Bauteil, insbesondere Sensor, und Verfahren zum Verkleben des Bauteils**
Element, in particular sensor, and method for adhering said element
Elément, en particulier capteur, et procédé pour coller ledit élément

(43) Veröffentlichungstag der Anmeldung: 01.02.2006
(73) Patentinhaber: Dr. Johannes Heidenhain GmbH, 83301 Traunreut (DE)
(72) Erfinder: Böge, Ludwig, 07751 Jena OT Jenapriessnitz/Wogau (DE); Franz, Heinz-Günther, 22359 Hamburg (DE); Freitag, Hans-Joachim, Dr., 07749 Jena (DE); Schmidt, Andreas, 99089 Erfurt (DE)

(56) Entgegenhaltungen:
- EP-A- 0 433 513
- EP-A- 1 041 363
- DE-A- 2 756 500
- DE-A- 4 002 514
- US-A- 3 655 482
- US-A- 4 822 656
- US-A1- 2002 063 321
- PATENT ABSTRACTS OF JAPAN Bd. 1995, Nr. 02, 31. März 1995 (1995-03-31) & JP 6 306332 A (NITTA GELATIN INC), 1. November 1994 (1994-11-01)

## Beschreibung

Die Erfindung bezieht sich auf ein Bauteil mit einer Montagefläche zum Befestigen an einer Anbaufläche, wobei Mittel zum gegenseitigen Verkleben von Montagefläche und Anbaufläche vorgesehen sind, um das Bauteil an der Anbaufläche anzukleben. Die Erfindung bezieht sich weiter auf ein Verfahren zur Befestigung eines Bauteils an einer Anbaufläche, wobei eine Montagefläche des Bauteils mit der Anbaufläche verklebt wird.

Häufig müssen Bauteile an Anbauflächen in vorbestimmten Lagen befestigt werden. Für diese Befestigungen haben sich Klebeverbindungen als besonders günstig, weil einfach anzuwenden, erwiesen, aber auch Schraub- oder Klemmverbindungen werden verwendet. Ein Beispiel für ein anzuklebendes Bauteil ist beispielsweise bei Längen- oder Winkelmesssystemen gegeben, bei denen es sehr verbreitet ist, optisch abzutastende Geberelemente am entsprechenden Maschinenteil anzukleben, wie dies unter anderem in der US 5,979,238 erwähnt ist.

Verklebungen sind besonders einfach anzuwenden, wenn ein am Bauteil aufgebrachter Klebefilm benutzt wird, da dann lediglich ein überlicherweise vorhandenes Schutzpapier abgezogen werden und die Klebeschicht aktiviert werden muss, was beispielsweise bei druckaktivierbaren Klebern durch Andrücken erfolgen kann. Es stellt sich hier jedoch die Problematik, dass vor der Aktivierung der Verklebung das Bauteil zuvor regelmäßig in eine bestimmte justierte Stellung an der Anbaufläche gebracht werden muss, und dass diese justierte Stellung bei der Aktivierung der Verklebung möglichst beibehalten werden sollte.

Gemäß der EP 1 041 363 A2 wird ein Maßstab als zu befestigendes Bauteil an einer Anbaufläche justiert und dann mittels einer Klebeschicht daran angeklebt. Um die Justierung zu bewerkstelligen, sind Abstandhalter zwischen der Anbaufläche und dem Maßstab vorgesehen, die nach der Justierung entfernt werden.

Der Erfindung liegt die Aufgabe zugrunde, ein Bauteil der genannten Art bzw. ein Montageverfahren der genannten Art so weiterzubilden, dass eine einfachere Befestigung und Justierung erreicht wird.

Diese Aufgabe wird mit einem Bauteil mit den Merkmalen des Anspruches 1 bzw. mit einem Montageverfahren mit den Merkmalen des Anspruches 8 gelöst.

Es werden also Abstandshalter verwendet, um einen vorbestimmten Spalt zwischen Anbaufläche und Montagefläche einzustellen. Legt man die Montagefläche des Bauteils mit zwischengelegten Abstandshaltern an die Anbaufläche, so daß der vorbestimmte Spalt zwischen Montagefläche und Anbaufläche gegeben ist, hat man eine Justierstellung, in der bis auf das Spaltmaß zwischen Bauteil und Anbaufläche die endgültige Lage hochpräzise einjustierbar ist. Die Justage kann natürlich sowohl auf die Anbaufläche bzw. ein die Anbaufläche aufweisendes Teil, wie auch auf ein drittes Bauteil referenziert werden. Berücksichtigt man vorteilhafterweise den vorbestimmten Spalt durch einen entsprechenden Vorhalt, ist das Bauteil nach der Endmontage, in der der vorbestimmte Spalt durch Hindrücken des Bauteils auf die Anbaufläche geschlossen ist, exakt in der gewünschten Endposition. In dieser Endposition kann dann die Endmontage stattfinden, d. h. das Bauteil wird unverrückbar an der Anbaufläche angebracht. Bei Justierungen, in denen der Spalt zur Anbaufläche sich nicht auswirkt, weil z. B. diese Koordinate irrelevant oder zumindest unkritisch ist, kann der Vorhalt unberücksichtigt bleiben.

Die Endmontage, in der Spalt durch Andrücken des Bauteils auf die Anbaufläche geschlossen wird, stellt dann das Einleiten der Verklebung dar. Verwendet man eine druckaktivierbare Klebeschicht, ist zugleich auch die Aktivierung des Klebstoffes bewirkt.

Die Abstandshalter haben also die grundsätzliche Funktion, ein sicheres Überführen des Bauteils aus der einjustierten Lage in die Endlage zu gewährleisten, ohne daß eine Dejustierung auftritt. Vorzugsweise können die Abstandshalter in einer Kombinationswirkung auch eine Justierlage bereitstellen, in der das Bauteil unter Berücksichtigung eines den Spalt wiedergebenden Vorhaltes in die gewünschte Endlage verbracht wird.

Bei Verwendung einer Klebeschicht für die Verklebung muß natürlich dafür Sorge getragen werden, daß der vorbestimmte Spalt größer ist als die Dicke der Klebeschicht, so daß bei Anlegen der Montagefläche an die Anbaufläche mit zwischenliegenden Abstandshaltern die Klebeschicht noch nicht in Kontakt mit der Anbaufläche tritt. Dies wird erst beim Verformen der Abstandshalter erreicht.

Es ist also an der Montagefläche eine Klebeschicht aufgebracht, die dünner ist als der vorbestimmte Spalt, so daß bei Anlage mit nicht verformten Abstandshaltern ein Spalt zwischen Klebefläche und Anbaufläche besteht, der durch Verformung der Abstandshalter schließbar ist.

Die Montagefläche weist entsprechend eine Klebeschicht auf, die beim Andrücken des Bauteils an die Anbaufläche das Bauteil an der Anbaufläche anklebt.

Weiter kann man die Abstandshalter zum Abschirmen der Verklebung einsetzen, da sie in Art einer Dichtung ausgebildet werden können. Diese Dicht- und damit Schutzwirkung der Abstandshalter ist um so größer, je vollständiger die Abstandshalter die Verklebung oder Klebeschicht umgeben. Insbesondere bei längs erstreckten Bauteilen ist es vorteilhaft, wenn die Abstandshalter die Klebeschicht mindestens an zwei Rändern begrenzt.

Die Verformung der Abstandshalter kann sowohl dauerhaft als auch reversibel sein. Bei dauerhaften, z. B. inelastisch verformbaren Abstandshaltern erreicht man den Vorteil, daß die Verklebung von Bauteil und Anbaufläche nicht durch elastische Rückstellkräfte der Abstandshalter unter Spannung gesetzt wird. Reversibel oder elastisch verformbare Abstandshalter haben dagegen eine besonders gute Dichtwirkung, da die Abstandshalter aufgrund der von ihnen ausgeübten Rückstellkraft die Klebeschicht wie eine Dichtung abschirmen.

Zweckmäßigerweise verwendet man deshalb Abstandshalter, die einen elastisch oder inelastisch verformbaren Abschnitt aufweisen oder vollständig verformbar sind. Insbesondere kann man als Abstandshalter eine Elastomerschnur wählen, die besonders kostengünstig in der Fertigung ist. Als Material für die Abstandshalter kommt in Frage: PU-Schaum, Styropor, Epoxidschäume, mineralische Materialien wie z. B. Kalk, Gips etc., Wachs, textile Gewirke.

In vielen Fällen wird das Bauteil zur Montage an der Anbaufläche angeliefert. Aus Gründen einer einfachen Montage ist es dann bevorzugt, daß das Bauteil mindestens eine an der Montagefläche vorgesehene Vertiefung aufweist, in der die oder der Abstandshalter eingelegt sind/ist. Für diese Maßnahme kann auf einfache Weise zum einen ein erforderlicher Vertormungsraum beim Einsatz verformbarer Abstandshalter und zum anderen eine Verlustsicherung der Abstandshalter gegen Abfallen bei der Montage erreicht werden. Darüber hinaus ist eine Nut eine mögliche Realisierung einer Verdrängungskammer, in die beim Verformen Material des Abstandshalters ausweichen kann.

Unter dem Gesichtspunkt einer möglichst reproduzierbaren Justierstellung, deren Präzision sich über den bei der Justierung zu berücksichtigenden Vorhalt letztendlich auf die Genauigkeit der Endmontage auswirkt, ist es zweckmäßig, die Abstandshalter an einer Auflage mit mindestens drei Punkten aufliegen zu lassen. Weiter ist es vorteilhaft, den Spalt zwischen Klebeschicht und Anbaufläche möglichst gering zu bemessen. Vorteilhafterweise liegt die Größe des Spaltes zwischen 1/100 und 5/10 mm.

Die Justierung des Abtastkopfes in der Justierlage kann durch beliebige Hilfsmittel unterstützt werden. Ist das Bauteil Teil eines Meßsystems, wird man zweckmäßigerweise das Meßsystem selbst zur Einjustierung des Bauteiles heranziehen. Bei einem Winkel- oder Längenmeßsystem kann man beispielsweise einen ohnehin für das Meßsystem vorgesehenen Abtastkopf verwenden, um die Justierung (gegebenenfalls unter Berücksichtigung des Vorhaltes) auszuführen.

Zur Justierung des Bauteils ist eine definierte statische Anlage über die Abstandshalter an der Anbaufläche günstig. Dies kann durch an mindestens zwei Punkten an der Anbaufläche aufliegende Abstandshalter gewährleistet werden. Allgemein ist natürlich eine Mehrpunktauflage, beispielsweise als Zwei- oder Dreipunktauflage oder auch Vier-, Fünf-, Sechspunktauflage usw. möglich.

Die Erfindung wird nachfolgend unter Bezugnahme auf die Zeichnungen beispielhalber noch näher erläutert. In den Zeichnungen zeigen:
- Fig. 1: eine schematische Schnittdarstellung eines Sensorelementes, das an einem Bauteil justiert und befestigt wird,
- Fig. 2: das Sensorelement der Fig. 1 während des Justagevorganges,
- Fig. 3: das Sensorelement der Fig. 2 nach abgeschlossenem Justiervorgang und bei der Endmontage,
- Fig.4: eine Ausschnittsdarstellung eines Sensorelementes ähnlich dem der Fig. 3 im endmontierten Zustand,
- Fig.5: eine Schnittdarstellung eines anderen Sensorelementes im Zustand des Elementes der Fig. 2,
- Fig. 6: das Sensorelement der Fig. 5 im Zustand des Elementes der Fig. 3,
- Fig.7: eine Draufsicht auf ein Ausführungsbeispiel für das in den Fig. 1 bis 6 in Schnittdarstellung gezeigte Sensorelement,
- Fig. 8 und 9: jeweils Draufsichten analog Fig. 7 von weiteren Ausführungsbeispielen,
- Fig. 10: ein Sensorelement ähnlich dem der Fig. 8 in einer Darstellung ähnlich der Fig. 2, d.h. während der Justage und vor der Endmontage,
- Fig. 11: das Sensorelement der Fig. 10 im endmontierten Zustand,
- Fig. 12: eine Schnittdarstellung einer Vorbefestigungseinrichtung zum Herstellen einer Justierlage während des Justiervorganges,
- Fig. 13: eine Draufsicht auf die Vorbefestigungseinrichtung der Fig. 12,
- Fig. 14: eine Schnittdarstellung eines Sensorelementes ähnlich der Fig. 4, allerdings mit der Vorbefestigungseinrichtung der Fig. 13 und 14 während des Justiervorgangs,
- Fig. 15: eine Darstellung ähnlich der Fig. 14 mit justierter Vorbefestigungseinrichtung bei der Vormontage,
- Fig. 16: die Baugruppe der Fig. 15 nach der Endmontage (eine Darstellung ohne Abstandshalter, d.h. außerhalb der Ansprüche),
- Fig. 17: eine Darstellung ähnlich der Fig. 14, wobei das Sensorelement eine Justierung im vormontierten Zustand ermöglicht,
- Fig. 18: eine Darstellung ähnlich der Fig. 15, wobei allerdings eine Justierung erfolgt, und
- Fig. 19: eine Darstellung ähnlich der Fig. 16.

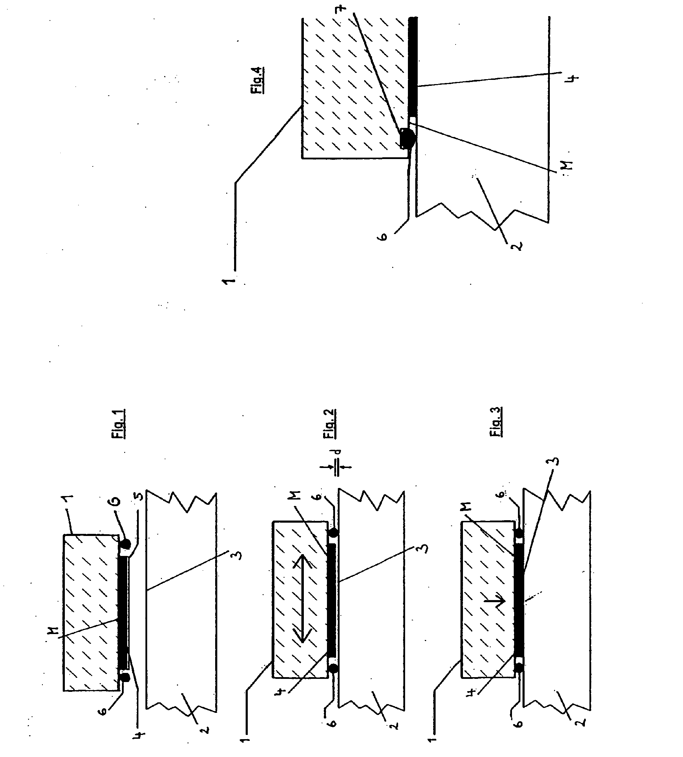

In Fig. 1 ist eine schematische Schnittdarstellung durch ein Sensorelement 1 gezeigt, in einer Phase des Montageverfahrens bevor das Sensorelement 1 an einem Teil 2 befestigt wird. In der gezeigten Ausführungsform ist das Sensorelement 1 Teil eines (nicht weiter dargestellten) Meßsystems, das z. B. die Bewegung eines Maschinenteils gegenüber einem anderen Maschinenteil erfaßt.

Die Befestigung des Sensorelementes 1 am Teil 2 erfolgt durch Verbinden einer Montagefläche M des Sensorelementes 1 mit der Anbaufläche 3 mittels einer Klebung. Dazu ist an der dem Teil 2 bzw. der Anbaufläche 3 zugeordneten Montagefläche M des Sensorelementes 1 eine Klebeschicht 4 vorgesehen, mit der das Sensorelement 1 auf die Anbaufläche 3 angeklebt wird. Da die Montage des Sensorelementes 1 üblicherweise erst nach der Bereitstellung des Teils 2 und damit vor Ort erfolgt, ist die Klebeschicht 4 üblicherweise mit einem Schutzpapier 5 abgedeckt, um eine unerwünschte Aktivierung der Klebeschicht 4 vor der Montage und insbesondere vor der Endjustierung des Sensorelementes 1 zu verhindern.

Zur Montage wird in einem Vorbereitungsschritt das Schutzpapier 5 von der Klebeschicht 4 abgezogen. Dann folgt ein Vormontageschritt, in dem das Sensorelement 1 mit der Montagefläche M auf die Anbaufläche 3 gesetzt wird. In einem Justierschritt wird dann die gewünschte Lage für das Sensorelement 1 hochpräzise einjustiert und schließlich in einem Endmontageschritt die Klebeschicht 4 aktiviert, um das Sensorelement 1 an der Anbaufläche 3 anzukleben. Üblicherweise verwendet man druckaktivierbare Klebstoffe.

Da bei druckaktivierbaren Klebstoffen ein Kontakt der Klebeschicht 4 mit der Anbaufläche das Verkleben einleitet, ist zum Einjustieren der Endlage im Justierschritt ein in Fig. 2 dargestelltes System mit Abstandshaltern 6 vorgesehen, die das Sensorelement 1 gegen das Teil 2 so abstützen, daß zwischen der Klebeschicht 4 und der Anbaufläche 3 ein Spalt der Dicke d bestehen bleibt. Erst wenn im Montageverfahren das Sensorelement 1 wunschgemäß ausgerichtet ist (z. B. gegenüber dem Teil 2), erfolgt die Klebung durch Kompression der Abstandshalter. Da eine Veränderung der Lage des Sensorelementes 1 nach der Justierung automatisch eine Dejustierung nach sich zöge, sollen Lageänderungen nach dem Justieren und vor der Verklebung des Sensorelementes 1 mit dem Teil 2 möglichst vermieden werden. Je nach Anwendung sind Lageänderungen von weniger als 10 µm ideal. Bei Linear- oder Winkelmeßsystemen liegt d deshalb vorzugsweise zwischen 5/10 und 1/100 mm.

Die in Fig. 2 dargestellten Abstandshalter 6 positionieren die Montagefläche M mit der Klebeschicht 4 mit einem definierten, möglichst geringen Spalt über der Anbaufläche 3, so daß im Justierschritt die Ausrichtung des Sensorelementes 1, beispielsweise in Richtung des in Fig. 2 schematisch dargestellten Doppelpfeiles, einfach möglich ist. Da in dieser Justierstellung das Sensorelement 1 bis auf die Dicke d des Spaltes bereits den korrekten Abstand zum Teil 2 aufweist, kann vorzugsweise zur Justierung eine Abtasteinheit verwendet werden, die für das Sensorelement ohnehin vorgesehen ist. Natürlich sind aber auch geeignete zusätzliche, optische, mechanische, elektrische oder andersartig wirkende Justierhilfsmittel einsetzbar.

Z. B. mit Hilfe der Abtasteinheit wird im Justierschritt überprüft, ob das Sensorelement 1 in der korrekten, endjustierten Lage ist. Ist diese Lage eingestellt, wird im Endmontageschritt das Sensorelement 1, wie in Fig. 3 schematisch dargestellt, durch Andrücken an die Anbaufläche 3 geklebt. Bei diesem Andrücken, das Richtung des in Fig. 3 eingezeichneten Pfeils erfolgt, werden die Abstandshalter 6 deformiert, und der Spalt wird geschlossen.

Die in den Fig. 1 bis 3 dargestellten und im Justierschritt wirkenden verformbaren Abstandshalter 6 können beispielsweise durch Gummischnüre realisiert werden. In der in den Fig. 2 und 3 dargestellten Bauweise wäre es dabei möglich, die Abstandshalter nach der Verklebung, d.h. im Zustand der Fig. 3, seitlich herauszuziehen, so daß eine etwaige elastische Rückstellkraft die Klebestelle nicht unter Spannung setzt (dies wäre aber nicht von den Ansprüchen abgedeckt). Bei einer geeignet stabilen Verklebung verbleiben die Abstandshalter 6 an Ort und Stelle . Die Abstandshalter 6 realisieren eine stabile Justierlage des Sensorelementes 1. Sie sind deshalb zur Anbaufläche 3 passend ausgestaltet.

Fig. 4 zeigt eine alternative Ausgestaltung ähnlich der der Fig. 1 bis 3. Hier ist am Sensorelement 1 eine Nut 7 vorgesehen, in der die hier wiederum als Gummischnur realisierten Abstandshalter 6 eingelegt sind und gehalten werden. Durch die Nut 7 kann das Sensorelement 1 bereits mit Abstandshaltern 6 ausgeliefert werden, da diese in der Nut 7 gehalten sind, vorzugsweise unverlierbar. Es könnte auch hier ein Entnehmen der Abstandshalter nach der Endmontage vorgesehen werden, z. B. durch Herausziehen der Abstandshalter 6 aus der Nut 7 (dies wäre aber nicht von den Ansprüchen abgedeckt). Die Nut 7 hält nicht nur die Abstandshalter 6, sondern wirkt auch als Verdrängungsraum, in den beim Deformieren der Abstandshalter 6 Material auweichen kann. Dies läßt gegenüber der Dicke der Klebeschicht 4 vergleichsweise großvolumige Abstandshalter zu. Natürlich ist die Nut 7 nur ein Beispiel für die Verdrängungsraumgestaltung.

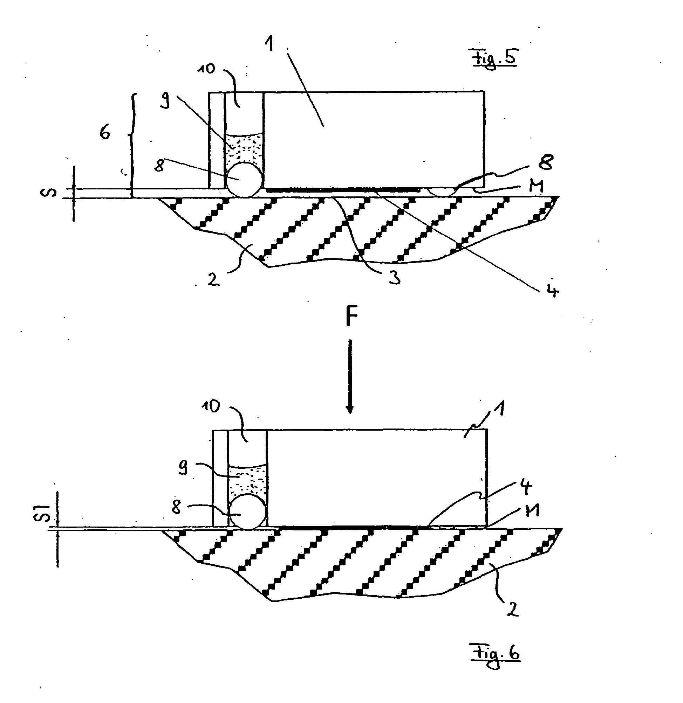

Eine weitere alternative Ausführungsform, die in den Fig. 5 und 6 dargestellt ist, verdeutlicht, daß die Abstandshalter auch mehrteilig ausgeführt sein können. Die in der Darstellung der Fig.2 zwischen Anbaufläche 3 und Unterseite des Sensorelementes 1 eingelegten deformierbaren Abstandshalter sind in der Bauweise, wie sie die Schnittdarstellung der Fig. 5 zeigt, durch einen als Kugel 8 realisierten, weitgehend starren Körper verwirklicht, der von einem verformbaren Klebstoff 9 in einer Bohrung 10 gehalten wird. Die Abstandshalter sind also mehrteilig ausgeführt mit einem starren (Kugel 8) und einem verformbaren Abschnitt (Klebstoff 9). Die Klammer 6 verdeutlicht dieses allgemeine Bauprinzip.

Die Abstandshalter 6 realisieren wiederum einen Spalt, da jede Kugel 8 um das Maß S an der Unterseite des Sensorelementes 1 vorsteht. Bedingt durch die Dicke der Klebeschicht 4 stellt sich somit ein Spalt zwischen Klebeschicht 4 und Anbaufläche 3 ein. Durch Aufbringen einer Kraft F in Richtung des in Fig. 6 gezeigten Pfeils wird die Kugel 8 unter Deformation des Klebstoffes 9 in die Bohrung 10 hineingedrückt und die Klebeschicht 4 verklebt das Sensorelement 1 an der Anbaufläche 3. Die Kugel 8 wird dabei bis auf einen Restspalt S1 in die Bohrung 10 gedrückt, der der Dicke der Klebeschicht 4 entspricht.

In der Lage der Fig. 5, d. h. mit noch nicht verformten Abstandshaltern 6 kann das Sensorelement 1 in die gewünschte Stellung am Teil 2 einjustiert werden; insofern gilt das zu den Fig. 1 bis 3 gesagte für diese Ausführungsform ebenso.

Die Bauweise der Fig. 5 und 6 verdeutlicht, daß die Abstandshalter 6 hier zwei grundsätzliche funktionelle Merkmale haben. Zum einen sorgen sie für einen vorbestimmten Spalt zwischen Montagefläche M des Sensorelementes 1 und Anbaufläche 3, an der das Sensorelement 1 befestigt werden soll. Dieser Spalt ist so bemessen, daß eine Verklebung des Sensorelementes 1 noch nicht stattfindet und eine Justierung möglich ist. Weiter sind die Abstandshalter 6 derart veränderbar, daß durch Andrücken des Sensorelementes 1 auf die Anbaufläche 3 hin der Spalt geschlossen werden kann. Dies erlaubt es die Verklebung zu aktivieren. Die Veränderung der Abstandshalter 6 wird durch Verformung bewirkt.

Die Verformung der Abstandshalter 6 kann elastisch oder inelastisch erfolgen. Man kann den Abstandshalter mehrteilig aufbauen und z. B. ein Abschnitt als spezielles Verformelement vorsehen, das in der Bauweise der Fig. 5 und 6 durch den Klebstoff 9 realisiert ist. Die Verwendung eines inelastischen Körpers, der an dem Verformelement abgestützt ist, ermöglicht es, die Verformwege und vor allem die Verformkräfte, die beim Andrücken des Sensorelementes 1 überbrückt werden müssen, exakt einzustellen. Möchte man beispielsweise die Bauweise der Fig. 5 hinsichtlich einer elastischen Verformung der Abstandshalter 6 abwandeln, kann man den Klebstoff 9 z. B. durch ein in der Bohrung 10 abgestütztes Federelement ersetzen.

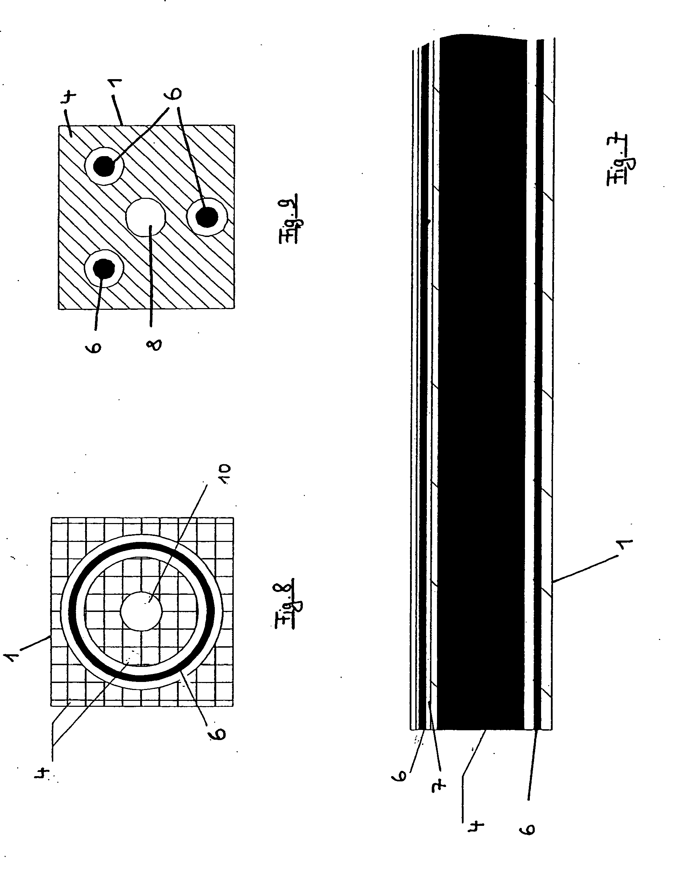

Fig. 7 zeigt eine Ansicht des Sensorelementes 1 der Fig. 1 bis 4 von der Seite mit der Klebeschicht 4 aus gesehen. Wie zu sehen ist, liegt die hier den Abstandshalter 6 realisierende Gummischnur in der Nut 7 außerhalb des Bereiches, an dem die Klebeschicht 4 aufgebracht ist. Das Sensorelement 1 ist in Fig. 7 beispielshalber als Maßstab eines Längenmeßsystems gezeigt. Da solche Meßsysteme üblicherweise an Werkzeugmaschinen eingesetzt werden, kommt hier eine zweite Wirkung der Abstandshalter 6 vorteilhaft zum Tragen. Die Abstandshalter 6 schützen die Klebstoffschicht an mindestens zwei Längskanten gegen Eintritt von Verunreinigungen oder die Verklebung beeinträchtigende Substanzen, z. B. Öle oder Lösungsmittel. Dieser Schutz ist bei nicht-punktförmigen grundsätzlichen Abstandshaltern 6 gegeben, wenn diese die Klebeschicht 4 zumindest teilweise nach außen begrenzen. Der Schutz ist um so besser, je vollständiger der Abstandshalter 6 den Bereich, an dem das Sensorelement 1 mit der Anbaufläche 3 verklebt ist, umgibt.

Fig. 8 zeigt eine Ausführungsform eines Sensorelementes 1, bei dem der Abstandshalter 6 ringförmig ausgebildet ist und einen inneren Bereich der Klebeschicht 4 vollständig umgibt. Zur Sicherung der Verklebung ist zusätzlich eine Bohrung 10 vorgesehen, durch die ein Sicherungselement, beispielsweise eine Schraube oder ein Niet gesetzt werden kann. Die Bohrung 10 ist im Ausführungsbeispiel der Fig. 8 im Zentrum des Sensorelementes 1 ausgeführt, da dort eine Verschraubung vorgesehen ist.

Eine alternative Ausgestaltung des Sensorelementes 1 der Fig. 8 zeigt Fig. 9. Hier ist der Abstandshalter 6 in Form einer Dreipunktauflage ausgebildet, die eine hochpräzise kipp- und spielfreie Einstellung des Spaltes S zwischen Anbaufläche 3 und Sensorelement 1 bewirkt. Für eine solche punktförmige Auflage, die von den Abstandshaltern 6 an drei Punkten bewirkt ist, bieten sich insbesondere Abstandshalter an, wie sie in Fig. 5 gezeigt wurden, da die dort dargestellten Kugeln 8 jeweils punktförmig aufliegen.

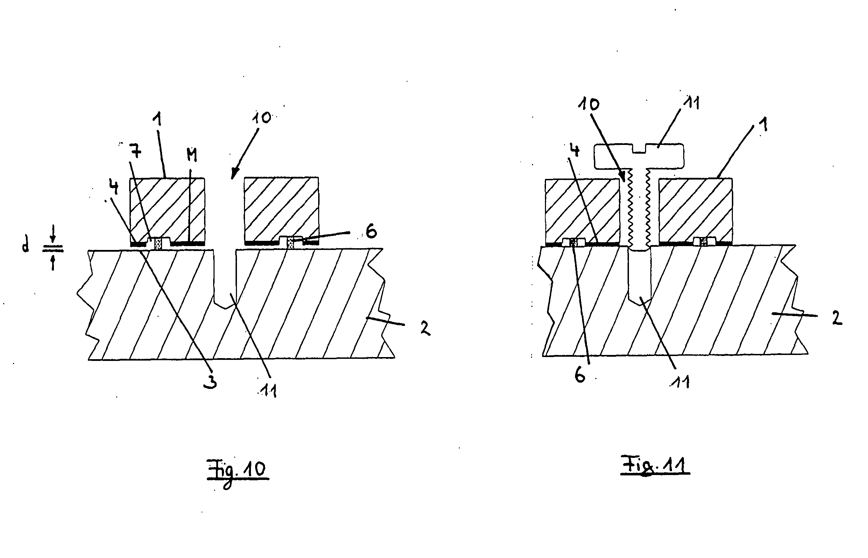

Fig. 10 zeigt das Sensorelement 1 der Fig. 8, bei der der Abstandshalter 6, anders als in der Bauweise der Fig. 1 bis 4, hier nicht elastisch deformierbar, sondern sich im Endmontageschritt inelastisch also dauerhaft verformend ist. An der Unterseite des Sensorelementes 1, an der auch die Klebeschicht 4 aufgebracht ist, ist eine Ringnut 7 ausgebildet, in der ein hier ringförmiger inelastisch verformbarer Abstandshalter 6 befestigt ist. Als Material für den Abstandshalter 6 kommt beispielsweise Styropor oder Schaumgummi in Frage. Die Klebeschicht 4 ist in- und außerhalb des Ringes der Ringnut 7vorgesehen.

Auch im Beispiel der Fig. 11 ist die optionale Bohrung 10 vorgesehen, die zur Sicherung des Sensorelementes 1 auf dem Maschinenteil 2 dient. Durch die Bohrung 10 wird ein Sicherungselement gesetzt, das in der Bauweise der Fig. 11 als Schraubverbindung 11 zwischen einem in einem Sackloch befindlichen Gewinde und einer Schraube ausgeführt ist.

Zur Vormontage wird das Sensorelement 1 auf die Anbaufläche 3, z. B. einen Wellenflansch, gesetzt. Die Abstandshalter 6 bewirken einen Spalt der Dicke d. Fig. 10 zeigt das Sensorelementes 1 nach dem Vormontageschritt in der Stellung zur Justierung, in der das Sensorelement 1 applikationsgerecht ausgerichtet wird. Z. B. wird die Bohrung 10 zur Drehachse eines sich drehenden Maschinenteils zentriert. Die Justierung ist einfach möglich, da der Abstandshalter 6 den bestimmten Spalt zwischen Klebeschicht 4 und Anbaufläche 3 sicherstellt. Ist die gewünschte Justierung erreicht, was mit Rückgriff auf eine das Sensorelement 1 abtastende Abtasteinheit überprüft werden kann, wird das Sensorelement 1 in der Endmontage auf das Maschinenteil hin gedrückt. Dabei verformen sich die Abstandshalter 6, und der Spalt wird geschlossen. Die Klebeschicht 4 verklebt das Sensorelement 1 an der Anbaufläche 3.

Zur zusätzlichen Befestigung oder Sicherung wird, wie in Fig. 11 gezeigt, dann die Schraubverbindung 11 mit der in das Gewindeloch eingreifenden Schraube angezogen. Der Abstandshalter 6, der beim Andrücken des Sensorelementes 1 verformt wurde, verbleibt in der Ringnut 7. Die Schraubverbindung kann aber auch zur Verwirklichung der Justierstellung als Vorbefestigungsmittel dienen, das im Justierabschnitt eine Lageeinstellung ermöglicht und dann die Endmontage mit Verformung des Abstandshalters 6 und Verklebung bewirkt (z. B. durch Anziehen der Schraubverbindung).

Wesentlich für die Beibehaltung der zuvor im Justierschritt einjustierten Lage beim Andrücken während der Endmontage ist eine hinreichend definierte Verformungskennlinie der Abstandshalter 6. Es kommen somit prinzipiell drei verschiedene Arten von Abstandshaltern in Frage.

Die Abstandshalter können elastische Werkstoffe aufweisen, so daß zumindest ein Abschnitt jedes Abstandshalters beim Andrücken des Klebers elastisch verformt wird. Insbesondere können hochfeste federnde Werkstoffe eingesetzt werden, wenn die Geometrie der Abstandshalter 6 so gestaltet ist, daß ein Andrücken des Sensorelementes gegen die federnde Wirkung des Abstandshalters 6 mit bestimmter Kraft erreichbar ist.

Bei den Abstandshaltem kann auch eine inelastische Verformung eingesetzt werden. Dies hat den Vorteil, daß keine die Verklebung belastende Kraft aufgebaut ist, wenn die Abstandshalter 6 deformiert wurden.

Das vorstehend erläuterte Sensorelement ist ein Beispiel für ein Bauteil, das in einer vorbestimmten Stellung an einer Anbaufläche eines anderen Bauteils geklebt werden muß. Dabei wird in den hier verfolgten Ansätzen der Weg beschritten, zuerst eine Vormontage durchzuführen, in der das Bauteil noch nicht endgültig befestigt wird. Zuerst wird soweit wie möglich die einzunehmende Endlage justiert. Dies kann mit und ohne Mitwirkung des Bauteils 1 gescheihen. In einer anschließenden Endmontage wird das Bauteil dann endgültig in die Ziellage gebracht und dabei fixiert; in den geschilderten Ausführungsbeispielen erfolgt dies mit einer Klebung.

Die nachfolgenden Figuren befassen sich damit, die Vormontage durch Vorbefestigungsmittel möglichst einfach zu bewerkstelligen.

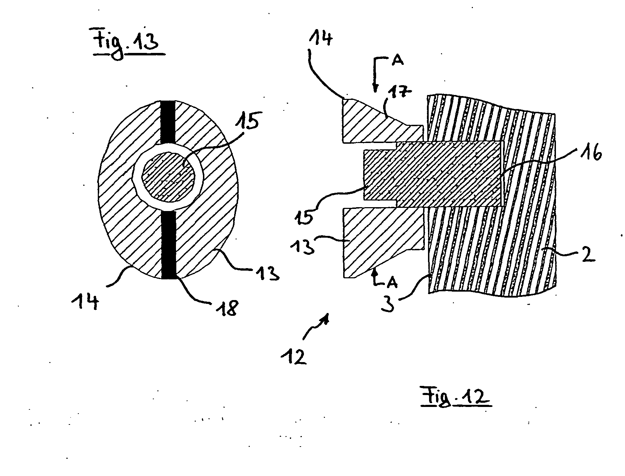

Fig. 12 zeigt ein Vorbefestigungsmittel 12, das zwischen Maschinenteil und Sensorelement wirkt. Dazu verfügt das Vorbefestigungsmittel 12 über zusammenwirkende Elemente sowohl am Maschinenteil als auch am Sensorelement. Am Maschinenteil 2, an welchem später das Sensorelement 1 befestigt werden soll, weist das Vorbefestigungsmittel 12 einen Kopf 13 auf, der an seinem Umfang als Exzenter 14 ausgebildet ist. Der Kopf 13 sitzt auf einem Zapfen 15, der in eine in das Maschinenteil 2 eingebrachte Bohrung 16 eingepreßt ist. Diese Preßpassung bewirkt, daß der Zapfen 15 drehfest an dem Maschinenteil 2 sitzt. Der Kopf 13 ist dagegen auf dem Zapfen 15 drehbar.

Diese funktionelle Wirkung des Vorbefestigungsmittels 12 kann natürlich auch dadurch erreicht werden, daß Kopf 13 und Zapfen 15 drehfest verbunden sind, und der Zapfen 15 in der Bohrung 16 drehbar gehalten ist, beispielsweise unter Zwischenschaltung eines in die Bohrung 16 vor dem Einsetzen des Zapfens 15 eingebrachten viskosen Mediums.

Der Kopf 13 hat neben einer als Exzenter 14 ausgebildeten Umrißlinie eine sich zum Maschinenteil 2 hin verjüngende Kegelstumpffläche 17. Es liegt somit ein kegelstumpfartiger Exzenter mit einer zylindrischen Umrißfläche vor. Der Kopf 13 hat also einen Kegelstumpfanteil und einen Zylinderanteil (letzterer im folgenden Exzenter 14).

Die Exzentrizität ist in der Schnittdarstellung der Fig. 13, die entlang der Linie A-A der Fig. 12 gewonnen wurde, deutlich zu sehen. Natürlich genügt jeder beliebige Exzenter, z. B. eine Kreisscheibe mit dezentral plazierter Achse. Fig. 13 zeigt weiter, daß der Exzenter 14 über einen Schlitz 18 verfügt, in den ein Schraubendreher eingesetzt werden kann, um den Exzenter um den Zapfen 15 zu schwenken. Diese Schwenkung dient, wie später noch erläutert werden wird, zur Einstellung der justierten Lage.

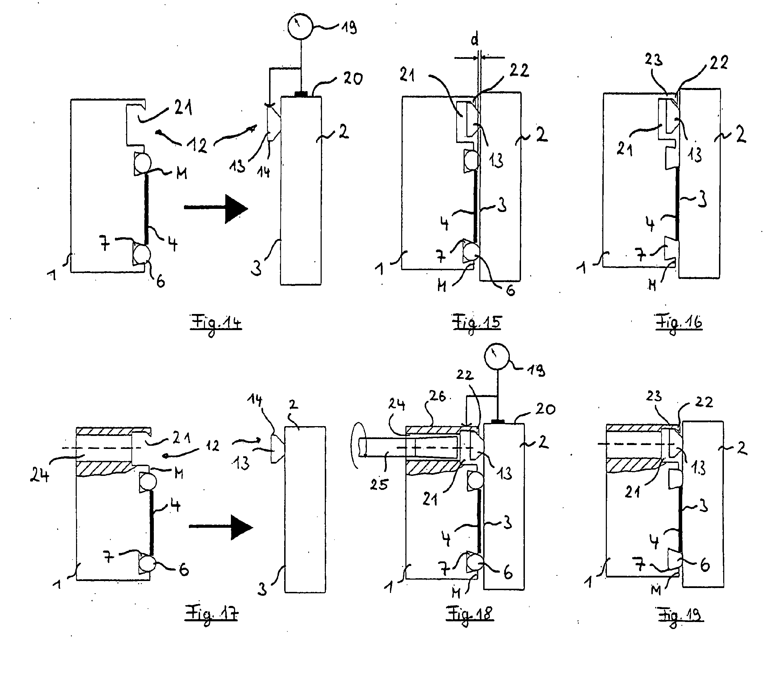

Die Fig. 14 bis 19 zeigen, wie das Sensorelement 1 unter Verwendung des Vorbefestigungsmittels 12 am Maschinenteil 2 befestigt wird. Die Darstellung ist dabei hinsichtlich des Maschinenteils 2 und des Sensorelementes 1 lediglich zur Veranschaulichung; von Bedeutung ist im wesentlichen die Wirkung des Vorbefestigungsmittels 12, wie sie nachfolgend exemplarisch erläutert wird. Insbesondere muß das Sensorelement 1 für die genannte Wirkung des Vorbefestigungsmittels 12 nicht unbedingt die eingangs geschilderten Abstandshalter 6 aufweisen.

Das Vorbefestigungsmittel weist zusätzlich zu den geschilderten Köpfen 13 eine oder mehrere passende Ausnehmungen 21 am Sensorelement 1 auf, mit denen das Sensorelement 1 an den Köpfen 13 aufgehängt werden kann. Die Vorbefestigungsmittel 12 sind also im wesentlichen durch zwei Komponenten gebildet, zum einen die Köpfe 13, die am Maschinenteil 2 befestigt werden, und zum anderen durch eine oder mehrere Ausnehmungen 21, mit denen das Sensorelement 1 an den Köpfen aufhängbar ist. Natürlich kann die in den Fig. 14 bis 19 gezeigte Bauweise auch hinsichtlich der Anordnung von Köpfen 13 und Ausnehmungen oder Ausnehmung 21 vertauscht werden, so daß ein oder mehrere Köpfe 13 am Sensorelement 1 vorgesehen werden und die entsprechenden dazugehörigen Ausnehmungen bzw. eine durchlaufende Ausnehmung am Maschinenteil 2.

In den Darstellungen der Fig. 14 bis 19 ist das Sensorelement beispielhalber als Linear-Geberelement eines Längenmeßsystems gezeigt. Die Fig. 14 bis 16 zeigen dabei eine erste mögliche Bauvariante des Vorbefestigungsmittels 12, die Fig. 17 bis 19 eine zweite Variante.

Zur Vorbereitung der Befestigung wurde an der Anbaufläche 3 des Maschinenteils 2 zuerst eine Reihe von Köpfen 13 angebracht, von denen die Schnittdarstellungen der Fig. 14 bis 19 jeweils einen zeigen. Das Sensorelement 1 kann an den Köpfen 13 aufgehängt werden. Dadurch ist ein separates Hilfselement zur Versteifung und Ausrichtung des Sensorelementes 1 entbehrlich.

Im Justierschritt werden in der Ausführungsform der Fig. 14 bis 16 zuerst die Exzenter 14 der Köpfe 13 mit Hilfe geeigneter Meßmittel, die in Fig. 14 durch eine Meßuhr 19 veranschaulicht sind, so einjustiert, daß alle Exzenter 14 bezogen auf das Maschinenteil 2 eine vorbestimmte Lage haben.

Die Meßuhr 19 erfaßt die Lage jedes Exzenters 14, d. h. des zylindrischen Abschnittes der Köpfe 13, bezogen auf eine Bezugsfläche 20, die z. B. am Maschinenteil 2 ausgebildet ist. Zur Einjustierung der Exzenter 14 wird jeder Kopf 13 so gedreht, daß die Oberkante des Exzenters 14 ein vorbestimmtes Maß zur Bezugsfläche 20 innehat. Die in einer Reihe am Maschinenteil 2 angebrachten Köpfe 13 der haben folglich dann eine fluchtende Oberkante ihrer Exzenter 14.

Nach diesem Justierschritt folgt die Vormontage, bei der, wie Fig. 14 veranschaulicht, das Geberelement 1 mit seiner Ausnehmung 21 an die Köpfe 13 gehängt wird. Den dadurch erreichten Zustand zeigt Fig. 15. Eine Hinterschneidung 22 an der Ausnehmung 21 bewirkt zusammen mit den Kegelstumpfflächen 17 der Köpfe 13, daß das eingehängte Sensorelement 1 nicht mehr von den Köpfen 13 abrutschen kann, sondern durch die konkrete Ausgestaltung auf die Anbaufläche 3 hingezogen wird. Durch die bereits erfolgte Einstellung der Exzenter 14 ist nach Abschluß der Vormontage das Sensorelement 1 dann in der gewünschten justierten Lage. Die geringe Größe des Spaltes d erlaubt, wie zuvor bereits erläutert, zur Abtastung des Sensorelementes ohnehin vorhandene Meßmittel zur Überprüfung der einjustierten Lage heranzuziehen.

Die Abstandshalter 6, die hier als Längselemente verwirklicht sind, bewirken den vorbestimmten Spalt d zwischen der Klebeschicht 4 und der Anbaufläche 3. Nun wird im Endmontageschritt das Sensorelement 1 auf das Maschinenteil 2 hingedrückt, wodurch sich die Hinterschneidung 22 von der Kegelstumpffläche jedes Kopfes 13 löst. Die bereits (vgl. Fig. 14) vorgenommene präzise Einjustierung der Oberkante der Exzenter 14 und die hochpräzise Ausbildung der Ausnehmung 21 stellen sicher, daß beim Andrücken des Sensorelementes 1 an die Anbaufläche 3, die vorbestimmte, justierte Lage erhalten bleibt.

Die Ausnehmung 21 ist dabei so gestaltet, daß sie eine Anlagefläche 23 aufweist, auf der die Exzenter 14 gleiten, wenn das Sensorelement 1 auf die Anbaufläche 3 gedrückt wird. Die Anlagefläche 23 der Ausnehmung 21 in Zusammenhang mit den justierten Exzentern 14 bewirkt dabei, daß der Spalt geschlossen wird; bis auf diese Abstandsänderung bezüglich des Maschinenteils 2 bleibt die Lage des Sensorelementes 1 unverändert im justierten Zustand. Somit ist im endmontierten Zustand der Fig. 16 das Sensorelement 1 in der justierten Stellung an die Anbaufläche 3 des Maschinenteils 2 geklebt.

In der in Figs. 1b gezeigten Darstellung wurden die Abstandshalter 6 aus den Nuten 7 entnommen (diese Darstellung liegt außerhalb der Ansprüche).

Anders als bei der Ausführung nach Fig. 1 - 5 wird in der Bauweise der Fig. 14 bis 16 der Justierschritt vor der Vormontage ausgeführt. Die Abstandshalter 6 wirken an der Justierung nicht mit, sondern ermöglichen die hochpräzise Endmontage in der bereits einjustierten Stellung.

Anders ist dies in der Bauweise, die die Fig. 17 bis 19 zeigen. Hier ist das Sensorelement 1 mit einer Bohrung 24 versehen, die es erlaubt, mittels eines Schraubendrehers 25 die Köpfe 13 zu verstellen, wenn das Sensorelement 1 bereits an die Köpfe 13 gehängt ist. Die Darstellung der Fig. 17 bis 19 entspricht im wesentlichen der in Fig. 14 bis 16 gezeigten Ansicht, so daß auf dort bereits beschriebene Elemente verwiesen wird.

In Fig. 17 wird das Sensorelement 1 mittels der Vorbefestigungsmittel 12, die wiederum die Ausnehmung 21 und die Köpfe 13 aufweisen, an das Maschinenteil 2 gehängt wird. Im Unterschied zur Fig. 14 sind die Köpfe 13 allerdings noch nicht justiert.

Der Justierschritt wird nach dieser Vormontage ausgeführt; den entsprechenden Zustand zeigt Fig. 18. Wiederum erfolgt mit Hilfe eines geeigneten Meßmoduls, das z. B. die Meßuhr 19 aufweisen kann, eine Erfassung der Lage zur Bezugsfläche 20. Nun wird allerdings nicht die Lage des Exzenters 14 selbst, sondern die einer entsprechenden Gegenfläche 26 des Sensorelements 1 gemessen. Durch die Bohrung 24 hindurch wird mit dem Schraubendreher 25 jeder Exzenter 14 so gedreht, daß die gewünschte Lage des Sensorelementes 1 gegenüber der Bezugsfläche 20 erreicht ist. Günstigerweise wird dabei die Durchbiegung des Sensorelementes entlang seiner (senkrecht zur Zeichenebene verlaufenden) Längsachse erfaßt und minimiert.

Anschließend wird, wie bereits erläutert, das Sensorelement 1 durch Andrücken auf das Maschinenteil 2 geklebt . In der Abwandlung zu der in den Fig. 16 gezeigten Bauweise verbleiben hier die elastisch deformierten Abstandshalter 6 in den Nuten 7.

## Patentansprüche

1. Bauteil mit einer Montagefläche (M) zum Befestigen an einer Anbaufläche (3), wobei Mittel zum gegenseitigen Verkleben von Montagefläche (M) und Anbaufläche (3) vorgesehen sind, um das Bauteil (1) an der Anbaufläche (3) anzukleben, indem das Bauteil (1) an seiner Montagefläche (M) eine Klebeschicht (4) aufweist, wobei
das Bauteil (1) an seiner Montagefläche (M) verformbare Abstandshalter (6) aufweist, die bei Anlage des Bauteils (1) an die Anbaufläche (3) einen vorbestimmten Spalt (S) zwischen Montagefläche (M) und Anbaufläche (3) bewirken;
die Klebeschicht (4) dünner ist als der durch die Abstandshalter (6) vorbestimmte Spalt, so dass bei Anlage mit nicht verformten Abstandshaltern (6) ein Spalt zwischen Klebeschicht (4) und Anbaufläche (3) besteht, wobei die Abstandshalter (6) durch Andrücken des Bauteils (1) an die Anbaufläche (3) verformbar ausgebildet sind und durch Verformung der Abstandshalter (6) der Spalt zwischen Klebeschicht (4) und Anbaufläche (3) schließbar ist, und
das Bauteil ein Geberelement eines Winkel- oder Längenmesssystems aufweist.

2. Bauteil nach Anspruch 1, wobei es an der Montagefläche (M) zumindest eine Vertiefung (7, 10) aufweist, in welche jeweils zumindest einer der Abstandshalter (6) eingelegt ist, und die derart ausgebildet ist, dass ein erforderlicher Verformungsraum (7, 10) geschaffen ist, in den beim Verformen der Abstandshalter (6) Material des Abstandshalters (6) ausweichen kann.

3. Bauteil nach Anspruch 1 oder 2, wobei die Abstandshalter (6) eine Auflage an mehreren Punkten bewirken.

4. Bauteil nach einem der vorhergehenden Ansprüche, wobei die Abstandshalter (6) die Klebeschicht (4) mindestens an einem Rand begrenzen.

5. Bauteil nach einem der vorhergehenden Ansprüche, wobei die Abstandshalter (6) mehrteilig mit einem starren Abschnitt (8) und einem verformbaren Abschnitt (9) ausgeführt sind.

6. Bauteil nach Anspruch 5, wobei der starre Abschnitt eine Kugel (8) ist.

7. Bauteil nach Anspruch 5 oder 6, wobei
die Vertiefung eine Bohrung (10) ist, in welcher sich ein Klebstoff (9) oder ein Federelement als verformbarer Abschnitt befindet.

8. Verfahren zur Befestigung eines Bauteils (1) an einer Anbaufläche (3), wobei eine Klebeschicht (4) einer Montagefläche (M) des Bauteils (1) mit der Anbaufläche (3) verklebt wird, wobei
an der Montagefläche (M) verformbare Abstandshalter (6) vorgesehen werden, welche bei Anlage des Bauteils (1) an die Anbaufläche (3) einen vorbestimmten Spalt (S) zwischen Montagefläche (M) und Anbaufläche (3) sowie mit nicht verformten Abstandhaltern (6) einen Spalt zwischen Klebeschicht (4) und Anbaufläche (3) bewirken;
das Bauteil (1) in eine vorbestimmte Lage justiert wird, und anschließend das Bauteil (1) an die Anbaufläche (3) angedrückt wird, wobei die Abstandshalter (6) verformt werden und der Spalt zwischen Klebeschicht (4) und Anbaufläche (3) geschlossen wird, und das Bauteil (1) ein Geberelement eines Winkel- oder Längenmesssystems aufweist.

9. Verfahren nach Anspruch 8, wobei bei der Einjustierung das Geberelement mit geeigneten Abtastmitteln ausgelesen wird.

## Claims

1. Component having a mounting surface (M) for fastening to an attachment surface (3), wherein means are provided for adhesively bonding the mounting surface (M) and attachment surface (3) to one another in order to adhesively bond the component (1) to the attachment surface (3) in that the component (1) has an adhesive layer (4) on its mounting surface (M), wherein the component (1) has deformable spacers (6) on its mounting surface (M), which spacers produce a predetermined gap (S) between the mounting surface (M) and attachment surface (3) when the component (1) bears against the attachment surface (3); the adhesive layer (4) is thinner than the gap predetermined by the spacers (6), with the result that, during bearing with non-deformed spacers (6), a gap is present between the adhesive layer (4) and attachment surface (3), wherein the spacers (6) are designed to be deformable by pressing the component (1) onto the attachment surface (3), and the gap between adhesive layer (4) and attachment surface (3) can be closed by deforming the spacers (6), and the component has a transmitter element of an angle- or length-measuring system.

2. Component according to Claim 1, wherein it has at least one depression (7, 10) on the mounting surface (M), into which depression at least one of the spacers (6) is inserted in each case, and which depression is designed in such a way that a required deformation space (7, 10) is provided into which material of the spacer (6) can yield during deformation of the spacers (6).

3. Component according to Claim 1 or 2, wherein the spacers (6) provide a support at a plurality of points.

4. Component according to one of the preceding claims, wherein the spacers (6) delimit the adhesive layer (4) at least at an edge.

5. Component according to one of the preceding claims, wherein the spacers (6) have a multi-part design with a rigid portion (8) and a deformable portion (9).

6. Component according to Claim 5, wherein the rigid portion is a ball (8).

7. Component according to Claim 5 or 6, wherein the depression is a bore (10) in which an adhesive (9) or a spring element as deformable portion is situated.

8. Method for fastening a component (1) to an attachment surface (3), wherein an adhesive layer (4) of a mounting surface (M) of the component (1) is adhesively bonded to the attachment surface (3), wherein deformable spacers (6) are provided on the mounting surface (M), which spacers, when the component (1) bears against the attachment surface (3), produce a predetermined gap (S) between the mounting surface (M) and attachment surface (3) and, with non-deformed spacers (6), produce a gap between the adhesive layer (4) and attachment surface (3); the component (1) is adjusted into a predetermined position, and the component (1) is then pressed onto the attachment surface (3), wherein the spacers (6) are deformed and the gap between the adhesive layer (4) and attachment surface (3) is closed, and the component (1) has a transmitter element of an angle- or length-measuring system.

9. Method according to Claim 8, wherein, during the adjustment, the transmitter element is read by suitable sensing means.

## Revendications

1. Composant, comprenant une surface de montage (M) pour la fixation à une surface d'attache (3), des moyens étant prévus pour coller l'une à l'autre la surface de montage (M) et la surface d'attache (3) afin de coller le composant (1) à la surface d'attache (3), le composant (1) présentant au niveau de sa surface de montage (M) une couche de colle (4),
le composant (1) présentant au niveau de sa surface de montage (M) des éléments d'espacement déformables (6) qui, lors de l'application du composant (1) contre la surface d'attache (3), créent un espacement prédéterminé (S) entre la surface de montage (M) et la surface d'attache (3) ;
la couche de colle (4) étant plus mince que l'espacement prédéterminé par les éléments d'espacement (6) de telle sorte que lors de l'application avec des éléments d'espacement non déformés (6), il existe un espacement entre la couche de colle (4) et la surface d'attache (3), les éléments d'espacement (6) étant réalisés de manière déformable par pression du composant (1) contre la surface d'attache (3) et l'espacement entre la couche de colle (4) et la surface d'attache (3) pouvant être fermé par déformation des éléments d'espacement (6), et
le composant présentant un élément émetteur d'un système de mesure d'angle ou de longueur.

2. Composant selon la revendication 1, dans lequel au moins un renfoncement (7, 10) existe au niveau de la surface de montage (M), dans lequel est introduit à chaque fois au moins l'un des éléments d'espacement (6), et qui est réalisé de telle sorte qu'un espace de déformation nécessaire (7, 10) soit produit, dans lequel, lors de la déformation des éléments d'espacement (6), le matériau de l'élément d'espacement (6) puisse s'échapper.

3. Composant selon la revendication 1 ou 2, dans lequel les éléments d'espacement (6) réalisent un appui sur plusieurs points.

4. Composant selon l'une quelconque des revendications précédentes, dans lequel les éléments d'espacement (6) limitent la couche de colle (4) au moins au niveau d'un bord.

5. Composant selon l'une quelconque des revendications précédentes, dans lequel les éléments d'espacement (6) sont réalisés en plusieurs parties avec une portion rigide (8) et une portion déformable (9).

6. Composant selon la revendication 5, dans lequel la portion rigide est une bille (8).

7. Composant selon la revendication 5 ou 6, dans lequel le renfoncement est un alésage (10) dans lequel se trouve un adhésif (9) ou un élément de ressort servant de portion déformable.

8. Procédé de fixation d'un composant (1) sur une surface d'attache (3), une couche de colle (4) d'une surface de montage (M) du composant (1) étant collée à la surface d'attache (3),
des éléments d'espacement déformables (6) étant prévus sur la surface de montage (M), lesquels, lors de l'application du composant (1) contre la surface d'attache (3), créent un espacement prédéterminé (S) entre la surface de montage (M) et la surface d'attache (3) et, lorsque les éléments d'espacement (6) ne sont pas déformés, créent un espacement entre la couche de colle (4) et la surface d'attache (3) ;
le composant (1) étant ajusté dans une position prédéterminée, et
ensuite le composant (1) étant pressé contre la surface d'attache (3), les éléments d'espacement (6) étant déformés et l'espacement entre la couche de colle (4) et la surface d'attache (3) étant fermé, et le composant (1) présentant un élément émetteur d'un système de mesure d'angle ou de longueur.

9. Procédé selon la revendication 8, dans lequel lors de l'ajustement, l'élément émetteur est lu avec des moyens de balayage appropriés.
